Europäisches Patentamt

European Patent Office

Office européen des brevets

(19)

(11) Publication number: **0 596 133 A1**

(12) EUROPEAN PATENT APPLICATION
published in accordance with Art.
158(3) EPC

(21) Application number: 93908105.5

(22) Date of filing: **16.04.93**

(86) International application number:
**PCT/JP93/00495**

(87) International publication number:
**WO 93/21012 (28.10.93 93/26)**

(51) Int. Cl.⁵: **B32B 15/01**

(30) Priority: **20.04.92 JP 98461/92**

(43) Date of publication of application:
**11.05.94 Bulletin 94/19**

(84) Designated Contracting States:
**DE FR GB IT**

(71) Applicant: **NIPPON STEEL CORPORATION**
**6-3 Otemachi 2-chome**
**Chiyoda-ku**
**Tokyo 100(JP)**

(72) Inventor: **AKAMATSU, Satoshi, Technical**
**Development Bureau**
**Nippon Steel Corporation,**
**20-1, Shintomi**
**Futtsu-shi, Chiba 299-12(JP)**
Inventor: **MATSUMURA, Yoshikazu, Technical**
**Development Bureau**
**Nippon Steel Corporation,**
**20-1, Shintomi**
**Futtsu-shi, Chiba 299-12(JP)**
Inventor: **SENUMA, Takehide, Yawata Works**
**Nippon Steel Corporation,**
**1-1, Tobihata-cho**
**Tobata-ku, Kitakyushyu-shi, Fukuoka 804(JP)**

(74) Representative: **VOSSIUS & PARTNER**
**Postfach 86 07 67**
**D-81634 München (DE)**

(54) **THIN-SHEET-CLAD STEEL SHEET AND METHOD OF PRODUCTION THEREOF.**

(57) The object is to provide a component design and a method of producing a thin-sheet-clad steel sheet comprising at least two kinds of layers having mutually different compositions, wherein the diffusion of carbon between the respective layers is drastically avoided in order to impart a cladding structure without deteriorating the characteristics inherent in each layer and to provide a plurality of characteristics compatible with one another. A thin-sheet-clad steel sheet comprising at least two kinds of layers having mutually different compositions, wherein heat treatment is carried out at a temperature at which the difference between equilibrium carbon activities of two adjacent layers is less than a specified value. In this way, the diffusion of carbon between the respective layers is drastically avoided, so that a thin-sheet-clad steel sheet can be obtained which has an extremely small mean carbon concentration gradient in each layer in the direction of the thickness of the sheet, and which provides characteristics of each layer compatible with those of the other layers.

Technical Field

The present invention relates to a thin clad steel sheet or plate for use in, for example, automobile interior and exterior sheets, thin construction sheets, container steel sheets, electromagnetic steel sheets, etc. and a process for producing the same and more particularly to a thin clad steel sheet composed of at least two layers having different compositions and having a clad structure with respective characteristics possessed by the individual layers without any deterioration, and a process for producing the same.

Background Art

(Prior Art)

Clad steel sheets having a laminate structure have been recently developed and produced by various production techniques such as rolling pressure welding, pour casting, explosive welding, etc., where steel species for the respective layers in the laminate structure have a wide coverage including very low carbon steel having a very small carbon content, low carbon high tensile steel, stainless steel having a high Cr content as well as high alloy steel. Through combinations of these individual steels having different compositions and material characteristics as a surface layer, inner layers, etc. single sheet in a multilayer structure can be provided as a clad steel sheet having a plurality of characteristics such as good processability, high corrosion resistance, etc. properly possessed by the respective layers in combination, that is, as the so called multifunctional steel sheets. Any change in the compositions of the individual layers during the production is not preferable for maintaining the characteristics expectable from the respective monolayer steel sheets in the clad state. However, in the production of thin steel sheets having a sheet thickness of not more than a few mm, elements fast diffusible through steel, such as C, sometimes diffuses across the layer boundary during a heat treatment such as recrystallization annealing. Such a diffusion often causes a trouble in the production of clad steel sheets.

For example, in case of a clad steel sheet comprising low carbon plain steel as a surface layer and very low carbon steel having a good processability as an interior layer, C diffuses from the surface layer into the interior layer during the annealing, deteriorating formation of recrystallization-induced aggregation structure in the interior layer, thereby increasing the recrystallization temperature or impairing the processability. In case of using stainless steel as a surface layer and low carbon steel as an interior layer, C diffuses from the interior layer to the surface layer to form a carbide of Cr contained in the surface layer, thereby deteriorating the corrosion resistance. There are so many cases suffering remarkably from these problems. The prior art proposes a composition design on the premise of C diffusion as a method for preventing material deterioration due to the C diffusion (JP-A 53-50007, JP-A 62-13332, etc.) and a maximum diffusion prevention by setting conditions for heat treatment (JP-A 54-49916, JP-A 58-113326, etc.). However, any of these proposed methods cannot prevent the C diffusion fundamentally.

(Problems to be solved by the Invention)

The present invention provides a composition design for preventing interlayer C diffusion fundamentally in a thin clad steel sheet composed of at least two layers having a different composition and having a clad structure without deteriorating characteristics individually possessed by the respective layers, while maintaining a plurality of characteristics at the same time, and also provide a process for producing the same.

Disclosure of the Invention

To solve these problems, the present invention employs steel sheets and means mentioned in the following items (1) to (6):

(1) A thin clad steel sheet comprising at least two layers having a different composition, characterized in that an average carbon concentration gradient in the sheet thickness direction in the respective layers is very small.

(2) A thin clad steel sheet comprising at least two layers having a different composition and a very small average carbon concentration gradient in the sheet thickness direction in the respective layers, characterized in that equilibrium carbon activities, $a_c(i)$ and $a_c(j)$ in the mutually adjacent two layers, i and j, respectively, meet the following relationship (I) at 700°C to 900°C:

$$| a_c(i) - a_c(j) | / (a_c(i) - a_c(j)) < 0.02 \quad (I)$$

(3) The steel sheet as described in the foregoing item (1) or (2), wherein the respective layers have a thickness of 0.01 to 1 mm.

(4) The steel sheet as described in any one of the foregoing items (1) to (3), characterized in that the average carbon concentration gradient in the sheet thickness direction in the respective layers meets the following relationship (II):

$$0.8 \leq Ci / \underline{C} \leq 1.2 \qquad (II)$$

wherein $\underline{C}$ is an average carbon concentration through the respective layers and $Ci$ is an average carbon concentration at a local site in the sheet thickness direction, such as a layer boundary, etc.

(5) A process for producing a thin clad steel sheet comprising at least two layers having a different composition and a very small average carbon concentration gradient in the thickness direction in the respective layers, characterized by heat treating the steel sheet, after hot and cold rollings, at such a temperature that equilibrium carbon activities, ac(i) and ac(j) in the mutually adjacent two layers, i and j, respectively, meet the following relationships:

$$| ac(i) - ac(j) | /(ac(i)-ac(j))< 0.02 \qquad (I)$$

(6) A process for producing a thin clad steel sheet as described in the foregoing item (5), wherein the heat treatment is carried out by box annealing after hot and cold rollings.

(Function)

The present invention will be described in detail below:

A clad steel sheet in a multilayer structure is produced by laminating at least two layers having a different composition into one sheet, followed by hot rolling, cold rolling, and heat treatment in the annealing or tempering step.

As a results of studies, the present inventors have found that the C diffusion between two layers having different compositions is caused not only due to a difference in the C concentration, but also depends on influences of other components contained in the steel in the respective layers, such as Si, Mn, Cr, etc., and on structure states of the respective layers during their individual heat treatments. That is, the present inventors have experimentally found that in an extreme case the diffusion can take place from one layer of lower C concentration to another layer of higher C concentration, as viewed from the average C concentration of the individual layers, that is, against the concentration gradient, and have clarified that the equilibrium carbon activity in the individual layers, determined by the compositions of the individual single layers before the heat treatment and a heat treatment temperature, is a very important factor as an indicator for the diffusion conditions relating to the C concentration.

Reasons for the limitation to the present invention based on the foregoing findings will be described below:

Firstly, explanation will be made of the equilibrium carbon activity, serving as a criterion for determining diffusion conditions.

The activity of solute elements in steel can be expressed in various standards, for example, according to the Henry standard, the Raoult standard, etc. In the present invention, any standard of expression can be used, so far as an activity is expressed in the same standard throughout for the two layers in question. In Examples which follow, the expression is based on the graphite stage at 25°C, while taking into account a case that C-containing phases are different. The structures of the individual layers in clad steel of the present invention are not always limited to single phase structures, and can include binary phase structures, for example, a dispersion of Cr-based carbide in austenite, or ternary phase structures, for example, a mixture of cementite and fine Ti or Nb-based carbide in ferrite.

Thus, in case the individual layers form a multiphase structure, equilibrium activities in an equilibrium state, determined by components in the individual layers at a heat treatment temperature are selected in the present invention. The carbon activity limited in the present invention is determined not only by steel components, but also by the structure stage at a heat treatment temperature, and can be generally obtained from a composition and a temperature by thermodynamic equilibrium calculation, so far as the carbon activities are equilibrium carbon activities. Such calculation can be carried out by a calculation tool having such thermodynamic parameters as, "THERMO-CALC (The Thermo-Calc Databank System. Sundman, B; Jansson, B; Andersson, J-O Calphad 9, (2), 153-190 Apr. - June 1985)" as a data base.

Reasons for limiting activity conditions of relationship (I) in the present invention will be explained below:

The activities of solute elements including carbon in steel depend not only on steel compositions, but also directly on a temperature of existing steel and indirectly on changes in the composition. In other words, such conditions that the carbon activities of two steel species are the same even at any temperature never exist except for a case that these two steel species have the same compositions. However, even in a case that the activity is discontinuous from one layer to another across the interlayer boundary, elements have no such a high diffusibility as to enable diffusion over a distance of the thickness of the individual layers, which makes the sheet thickness, in a region of low temperature such as not more than 500°C, and thus concentration changes due to diffusion through the individual layers are very small.

In an extreme case that all the elements in the individual layers take part in diffusion when the steel is kept at a high temperature for an infinitely long time, it is taught thermodynamically that the compositions in the individual layers all become uniform. The C diffusion aimed at by the present invention is a phenomenon appearing in such a temperature range that no other elements than C undergo diffusion so much, but only C undergo diffusion through the layers across the interlayer boundary. The temperature range will be from about 600°C to about 1,000°C for the heat treatment of a thin steel sheet having a thickness of not more than a few mm. Such a temperature range is often utilized as a heat treatment temperature in an annealing step after cold rolling or in a tempering step in the production of a clad steel sheet. Particularly in case of a heat treatment for a long time, for example, a box annealing as a typical one, such a phenomenon is liable to appear, because not only temperature, but also the diffusion time at that temperature is required for the C diffusion.

That is, when a clad steel sheet is heat treated at such a temperature, and when there is a large difference in the equilibrium carbon activity between mutually adjacent two layers, there is a possibility for diffusion of C from a layer of higher activity to a layer of lower activity. In the present invention a temperature that can satisfy the relationship (I) is selected as a heat treatment condition among conditions that can prevent changes in the C concentration in the individual layers due to the C diffusion during the heat treatment, whereby production conditions without the C diffusion can be limited.

In other words, the steel sheet of the present invention is a clad steel sheet based on such a combination of layers as to satisfy the relationship (I) at an intermediate temperature with in the above-mentioned temperature range, i.e. 700°C to 900°C.

In case of the present thin clad steel sheet and the present process for producing the same, no C diffusion basically takes place between the constituent layers during the heat treatment even if the heat treatment, typically, box annealing, is carried out for a long time, and thus the average carbon concentration gradient hardly appears in the thickness direction in the individual layers.

For the steel for the individual layers that constitute a layer structure of the present clad steel sheet, extremely low carbon steel containing a very small amount of C, low carbon, high tensile steel, electromagnetic steel containing not more than 7% of Si, stainless steel having a high Cr concentration, a high alloy steel, etc. can be used, and the thickness of the individual layers is 0.01 to 1 mm, preferably 0.02 to 0.6 mm.

In the foregoing item (1), the average carbon concentration gradient in the sheet thickness direction in the respective layers is a gradient of intralayer macroscopic carbon concentration resulting form inflow and outflow of carbon atoms due to diffusion across the respective interlayer boundaries, and when the layer structure is a multiphase structure or a dispersion structure of precipitates, it is a gradient of arithmetic mean of volume fractions including that of the matrix.

That the gradient is very small means that the average carbon concentration $C_i$ at local sites in the sheet thickness direction on the interlayer boundaries, etc. can satisfy the following relationship (II) on the basis of the average carbon concentration $\underline{C}$ throughout the individual layers:

$$0.8 \leq C_i / \underline{C} \leq 1.2 \quad \text{(II)}$$

That is, when $C_i$ is beyond the range of relationship (II) on the basis of $\underline{C}$, carbon atoms form inflows into the layer from the outside, and the average carbon concentration gradient is large in the sheet thickness direction.

Brief Description of the Drawings

Fig. 1 is a diagram showing changes in the average carbon concentration in the sheet thickness direction from the surfaces of clad steel sheets.

Fig. 2 is a diagram showing changes in average carbon concentration in the sheet thickness direction from the surfaces of clad steel sheets according to another embodiment.

Mode for carrying out the Invention

Examples of the present invention will be shown below:

Example 1

3 steel species each containing components shown in Table 1 were used. A steel sheet of species A - species B1 - species A, welded by electron beams, where species A had 10% of the total thickness each as the surface layer and the back layer and species B1 had 80% of the total thickness as the inner layer and another steel sheet of species A - species B2 - species A, welded by electron beams where the species A had the same thickness as above each as the surface layer and the back layer and the species B2 had the same thickness as above as the interior layer, were hot rolled to a total thickness of 3.0 mm and then cold rolled to a total thickness of 0.6 mm, and annealed at 750°C for 3 hours.

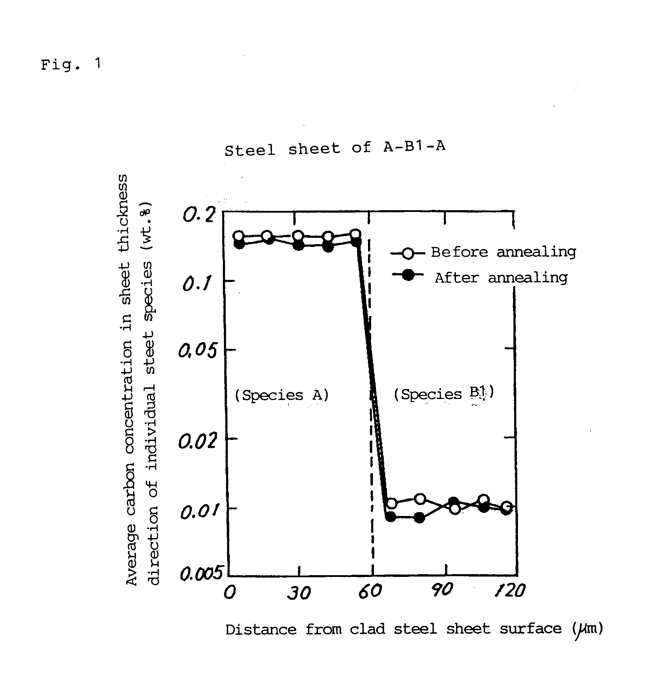

Changes in the average C concentration (average concentration on a broad plane on such a give level in the sheet thickness direction that no local changes in the C concentration due to the intralayer structure may appear) in the sheet thickness direction down to the depth of 120 $\mu$m from the surface toward the center of the sheet thickness before and after the annealing are shown in Fig. 1.

The C concentration was determined by sputtering the cross-section of the sheet in the thickness direction by SIMS (secondary ion mass spectroscopy), thereby obtaining ion intensities, and converting ion intensities to concentrations by a calibration diagram obtained by measurement of various C concentration in steel sheets in advance.

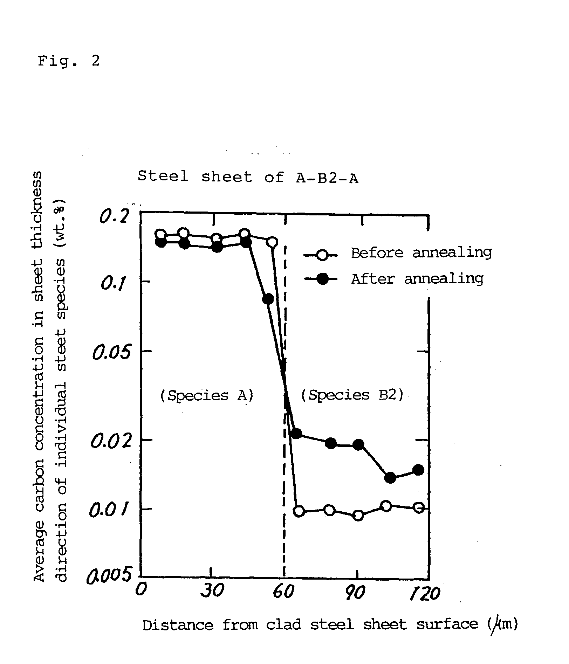

As is obvious from Fig. 1 and Fig. 2, the C concentration is made apart at the interlayer boundary shown by a dotted line approximately at the center of the diagram before annealing in both cases of steel sheet of A-B1-A and steel sheet of A-B2-A, and no C diffusion takes place.

After annealing, on the other hand, the C concentration is made apart likewise at the interlayer boundary and substantially no changes in the concentration take place in the B1 layer in case of steel sheet of A-B1-A, whereas in case of steel sheet of A-B2-A, a concentration gradient, which seems to be due to diffusion of C from the layer A, appears in the B2 layer. That is, the average carbon concentration gradient in the layers A of steel sheet of A-B1-A satisfies the relationship (II), whereas that of steel sheet of A-B2-A fails to satisfy the relationship (II).

In Table 1, the equilibrium carbon activities at 750°C, calculated from the single components of the respective steel species A, B1 and B2, and the values according to the relationship (I) in the respective clad sheets as indicators for the present invention are shown, and it can be seen from the table that the steel sheet of A-B1-A corresponds to the steel sheet of the present invention. That is, it can be seen from the foregoing that whether or not there is C diffusion at the annealing, which is not determined simple from the C concentration, can be predicted in the present invention. In other words, the present invention can teach what combination can produce no changes in the C concentration during the heat treatment and also can select components in another layer so as to prevent deterioration of quality due to the C diffusion with regard to components in one layer for forming a clad steel sheet.

Table 1

|  | Steel components, (wt%) | | | Average carbon activity ac at 750°C (based on graphite at 25°C) | Left side of relationship (I) in a clad steel state in contact with species A |
|---|---|---|---|---|---|
|  | C | Si | Mn | | |
| Species A | 0.17 | 0.45 | 1.16 | 0.1129 | - |
| Species B1 | 0.01 | 0.25 | 0.16 | 0.1106 | 0.010 |
| Species B2 | 0.01 | 0.03 | 0.35 | 0.1005 | 0.058 |

Example 2

Two steel species each containing components shown in Table 2 were used. Species A as austenic stainless steel was used as a surface layer and a back layer, each having 15% of the total sheet thickness and species B as common steel was used as an interior layer having 70% of the total sheet thickness, and the species A and B were pour casted in a laminate steel sheet, then hot rolled to a total thickness of 4.0 mm and cold rolled to a total thickness of 0.8 mm, and then annealed at 670°C and 870°C each for one hour. The cross-section in the sheet thickness direction of the annealed sheet was inspected by an optical microscope, and it was found that there were fine Cr-based carbides along the austenite grain boundaries near the interlayer boundary on the surface layer side in case of 670°C-annealed sheet, whereas no such deposits were found in case of 870°C-annealed sheet. The sheet were subjected to salt water spraying and corrosion test using 42% magnesium chloride. The 870°C-annealed sheet showed an equal corrosion resistance to that of stainless steel sheet, that is, single species A, whereas the 670°C-annealed sheet showed considerable deterioration in the corrosion resistance, which seems to be due to formation of Cr-vacant regions caused by precipitation.

Table 2 shows equilibrium carbon activities at 670°C and 870°C, calculated from the components of each of single species A and B and a value according to the relationship (I) in the clad sheet as an indicator for the present invention are shown. It can be seen from the table that the heat treatment temperature of 870°C is a condition for satisfying the relationship (I) of the present invention. It is apparent that the precipitation of carbides in the layer A observed in the 670°C-annealed sheet was newly made by supply of C by diffusion from the layer B. It can be derived from the state of carbides existing in the sheet thickness direction that the average carbon concentration in the sheet thickness direction in the layer A has a large gradient.

It can be seen from the foregoing that the present invention can select such a heat treatment temperature as to prevent C diffusion and can produce a clad steel sheet without deteriorating the characteristics originally possessed by the individual layers.

Table 2

|  | Steel components (wt %) | | | | | Equilibrium carbon Activity ac at various heat treatment temperature (based on graphite at 25°C) | | Left side of relationship (I) in a clad steel state | |
|---|---|---|---|---|---|---|---|---|---|
|  | C | Si | Mn | Ni | Cr | 670°C | 870°C | 670°C | 870°C |
| Species A | 0.06 | 0.51 | 0.83 | 8.7 | 18.1 | 0.00014 | 0.00074 | 0.998 | 0.012 |
| Species B | 0.005 | 0.03 | 0.80 | <0.01 | <0.01 | 0.15834 | 0.00072 | | |

Industrial Utilizability

The present invention efficiently produces and provides a thin clad steel sheet capable of possessing at least two characteristics at the same time through a combination of various layers, and substantially prevents diffusion of C during the heat treatment, which is a serious problem in the production of clad steel sheets. Thus, industrially very large effects can be expected.

## Claims

1. A thin clad steel sheet comprising at least two layers having a different composition, characterized in that an average carbon concentration gradient in the sheet thickness direction in the respective layers is very small.

2. A thin clad steel sheet comprising at least two layers having a different composition and having a very small average carbon concentration gradient in the sheet thickness direction in the respective layers, characterized in that equilibrium carbon activities, $ac(i)$ and $ac(j)$ in the mutually adjacent two layers, $i$ and $j$, respectively, meet the following relationship (I) at 700°C to 900°C:

$$|\,ac(i) - ac(j)\,|/(ac(i) - ac(j)) < 0.02 \qquad (I)$$

3. The steel sheet according to Claims 1 or 2, wherein the respective layers have a thickness of 0.01 to 1 mm.

4. The steel sheet according to any one of Claims 1 to 3, characterized in that the average carbon concentration gradient in the sheet thickness direction in the respective layers meets the following relationship (II):

$$0.8 \le C_i\,/\,\underline{C} \le 1.2 \qquad (II)$$

wherein $\underline{C}$ is an average carbon concentration through the respective layers and $C_i$ is an average carbon concentration at a local site in the sheet thickness direction, such as a layer boundary, etc.

5. A process for producing a thin clad steel sheet comprising at least two layers having a different composition and a very small average carbon concentration gradient in the thickness direction in the respective layers, characterized by heat treating the steel sheet, after hot and cold rollings, at such a temperature that equilibrium carbon activities, $ac(i)$ and $ac(j)$ in the mutually adjacent two layers, $i$ and $j$, respectively, meet the following relationships:

$$|\,ac(i) - ac(j)\,|/(ac(i) - ac(j)) < 0.02 \qquad (I)$$

6. A process for producing a thin clad steel sheet according to claim 5, wherein the heat treatment is carried out by box annealing after hot and cold rollings.

7

Fig. 1

Steel sheet of A-B1-A

Average carbon concentration in sheet thickness direction of individual steel species (wt.%)

0.2 —

0.1 —

0.05 —

○— Before annealing
●— After annealing

(Species A)    (Species B1)

0.02 —

0.01 —

0.005 —

0   30   60   90   120

Distance from clad steel sheet surface (μm)

Fig. 2

Steel sheet of A-B2-A

Average carbon concentration in sheet thickness direction of individual steel species (wt.%)

Distance from clad steel sheet surface (μm)

- ○ Before annealing
- ● After annealing

(Species A)    (Species B2)

9

International application No.

PCT/JP93/00495

**A.    CLASSIFICATION OF SUBJECT MATTER**

Int. Cl$^5$  B32B15/01

According to International Patent Classification (IPC) or to both national classification and IPC

**B.    FIELDS SEARCHED**

Minimum documentation searched (classification system followed by classification symbols)

Int. Cl$^5$  B32B15/01, C22C38/00

Documentation searched other than minimum documentation to the extent that such documents are included in the fields searched

| | |
|---|---|
| Jitsuyo Shinan Koho | 1926 – 1993 |
| Kokai Jitsuyo Shinan Koho | 1971 – 1993 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP, A, 49-77848 (Mitsubishi Heavy Industries, Ltd.), July 26, 1974 (26. 07. 74), (Family: none) | 1-6 |
| Y | JP, A, 61-223126 (Kawasaki Steel Corp., Mitsubishi Heavy Industries, Ltd.), October 3, 1986 (03. 10. 86), (Family: none) | 1-6 |
| Y | JP, A, 4-89238 (Hitachi Metals, Ltd.), March 23, 1992 (23. 03. 92), (Family: none) | 1-6 |

☐  Further documents are listed in the continuation of Box C.          ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| June 7, 1992 (07. 06. 92) | June 29, 1993 (29. 06. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)